# EUROPEAN PATENT SPECIFICATION

(11) **EP 4 494 245 B1**
(45) Date of publication and mention of the grant of the patent: **05.11.2025**
(21) Application number: 23710388.2
(22) Date of filing: 07.03.2023
(51) Int. Cl.: H02K 1/24, H02K 15/02, H02K 19/10, H02K 1/276, H02K 15/03

(54) **A ROTOR OF A SYNCHRONOUS RELUCTANCE MACHINE AND A METHOD FOR MANUFACTURING THE SAME**
ROTOR EINER SYNCHRONEN RELUKTANZMASCHINE UND VERFAHREN ZUR HERSTELLUNG DAVON
ROTOR DE MACHINE À RÉLUCTANCE SYNCHRONE ET PROCÉDÉ DE FABRICATION ASSOCIÉ

(30) Priority: 15.03.2022 FI 20225228
(43) Date of publication of application: 22.01.2025
(60) Divisional application: 25198826.7
(73) Proprietor: Lappeenrannan-Lahden teknillinen yliopisto LUT, 53851 Lappeenranta (FI)
(72) Inventor: PYRHÖNEN, Juha, 53851 LAPPEENRANTA (FI); SOPANEN, Jussi, 53851 LAPPEENRANTA (FI); POUTIAINEN, Ilkka, 53851 LAPPEENRANTA (FI); SIKANEN, Eerik, 53851 LAPPEENRANTA (FI); PETROV, Ilya, 53851 LAPPEENRANTA (FI)
(74) Representative: Väänänen, Janne Kalervo
(86) International application number: PCT/FI2023/050126
(87) International publication number: WO 2023/175233

(56) References cited:
- EP-A1- 3 739 724
- DE-A1- 102020 209 932
- US-A- 5 893 205
- US-A1- 2012 146 448
- US-A1- 2019 165 625

## Description

### Field of the disclosure

The disclosure relates generally to rotating electric machines. More particularly, the disclosure relates to a rotor of a synchronous reluctance machine or of a permanent magnet assisted synchronous reluctance machine. Furthermore, the disclosure relates to a synchronous reluctance machine and to a method for manufacturing a rotor of a synchronous reluctance machine.

### Background

Rotating electric machines, such as motors and generators, generally comprise a rotor and a stator which are arranged such that a magnetic flux is developed between these two. A rotor of a synchronous reluctance machine comprises typically a ferromagnetic core structure and a shaft. The ferromagnetic core structure is arranged to have different reluctances in the direct d and quadrature q directions of the rotor. Thus, the synchronous reluctance machine has different inductances in the direct and quadrature directions and thereby the synchronous reluctance machine is capable of generating torque without a need for electric currents and/or permanent magnets in the rotor.

Different reluctances in the direct and quadrature directions can be achieved for example with salient poles so that the airgap is wider in the direction of the quadrature axis than in the direction of the direct axis. Typically, a salient pole rotor is however not suitable for high-speed applications where the airgap should be smooth and where mechanical stress maxima in the rotor construction should be minimized as well as possible. Another approach to provide different reluctances in the direct and quadrature directions is based on cuttings in a rotor structure so the cuttings increase the reluctance in the direction of the quadrature axis more than in the direction of the direct axis. This approach is straightforward to use in cases where a rotor has a laminated structure comprising ferromagnetic sheets stacked in the axial direction of the rotor since the cuttings can be made on the sheets one-by-one. The approach based on the cuttings is however not free from challenges. One of the challenges is related to isthmuses formed by the cuttings because high local mechanical stresses may take place in the isthmuses and thereby the isthmuses may constitute weak points of the rotor structure. On the other hand, making the isthmuses wider would degrade the magnetic properties of rotor. A third approach to provide different reluctances in the direct and quadrature directions is based on a stack of ferromagnetic sheets which are separated from each other with layers of non-ferromagnetic material so that the reluctance is greater in a direction perpendicular to the sheets than in a direction parallel with the sheets. Especially in conjunction with high-speed applications, one of the challenges is related to structures and/or other arrangements which are needed to keep the ferromagnetic sheets together.

Publication US20120146448 describes a rotor for a synchronous reluctance machine. The rotor comprises a plurality of rotor modules disposed in an axial sequence along a common axis. Each rotor module includes a plurality of poles disposed in adjacent sectors about the common axis, each pole comprising a plurality of ferromagnetic segments spaced apart from one another in radial direction, a support plate, provided on an axial side of the plurality of poles, and fastening means for fastening the plurality of poles to the support plate. The fastening means, preferably a plurality of axially arranged bolts or an adhesive, bonds the plurality of poles to the support plate.

### Summary

The following presents a simplified summary to provide a basic understanding of embodiments of the invention. The summary is not an extensive overview of the invention. It is neither intended to identify key or critical elements of the invention nor to delineate the scope of the invention. The following summary merely presents concepts of the invention in a simplified form as a prelude to a more detailed description of exemplifying embodiments of the invention.

In this document, the word "geometric" when used as a prefix means a geometric concept that is not necessarily a part of any physical object. The geometric concept can be for example a geometric point, a straight or curved geometric line, a geometric plane, a non-planar geometric surface, a geometric space, or any other geometric entity that is zero, one, two, or three dimensional.

In accordance with the invention, there is provided a new rotor for a synchronous reluctance machine. A rotor according to independent claim 1 comprises:
- a shaft, and
- modules stacked in an axial direction of the rotor and surrounding the shaft. Each of the modules comprises flux-guides made of ferromagnetic material and gaps between the flux-guides to implement greater reluctance in a direction of the quadrature axis of the rotor than in a direction of the direct axis of the rotor. Furthermore, each of the modules comprises at least one support plate axially successively with respect to the flux-guides so that the flux-guides of the module are attached to the support plate, wherein the support plate is shaped to have axial recessions in which the flux-guides are located, and which are configured to implement shape locking of the flux-guides against centrifugal force. The support plate is shaped to have the axial recessions so that the support plate has axial projections on a surface of the support plate opposite with respect to a surface of the support plate having the axial recessions.

As the flux-guides are mechanically supported by the support plate, there is no need for isthmuses between the flux-guides, or the isthmuses can be smaller, and thereby the magnetic properties of the rotor can be better than those of a rotor whose mechanical strength is based on isthmuses between flux-guides.

The "gaps between the flux-guides" are to be understood as spatial areas which are free from the material of the flux-guides. It is to be noted that the gaps are not necessarily filled with air, but it is also possible that the gaps are filled with for example plastic, resin, non-ferromagnetic metal, permanent magnet material, or some other material having magnetic permeability lower than that of the material of the flux-guides.

In accordance with the invention, there is also provided a new synchronous reluctance machine. A synchronous reluctance machine according to the invention comprises:
- a stator comprising stator windings for generating a rotating magnetic field in response to being supplied with alternating currents, and
- a rotor according to the invention, the rotor being rotatably supported with respect to the stator.

In accordance with the invention, there is also provided a new method for manufacturing a rotor of a synchronous reluctance machine. A method according to independent claim 15 comprises:
- manufacturing modules each comprising flux-guides made of ferromagnetic material and having gaps between the flux-guides to implement greater reluctance in a direction of a quadrature axis of the rotor than in a direction of a direct axis of the rotor, and
- stacking the modules in the axial direction of the rotor to surround a shaft of the rotor.

The manufacturing of each of the modules comprises attaching the flux-guides of the module to at least one support plate of the module, the support plate being axially successively with respect to the flux-guides of the module. The support plates are shaped to have axial recessions in which the flux-guides are located, and which are configured to implement shape locking of the flux-guides against centrifugal force. The support plates are shaped to have the axial recessions so that the support plates have axial projections on a surface of the support plate opposite with respect to the surface of the support plate having the axial recessions.

Exemplifying and non-limiting embodiments are described in accompanied dependent claims.

Exemplifying and non-limiting embodiments both as to constructions and to methods of operation, together with additional objects and advantages thereof, will be best understood from the following description of specific exemplifying embodiments when read in conjunction with the accompanying drawings.

The verbs "to comprise" and "to include" are used in this document as open limitations that neither exclude nor require the existence of also un-recited features. The features recited in dependent claims are mutually freely combinable unless otherwise explicitly stated.

Furthermore, it is to be understood that the use of "a" or "an", i.e. a singular form, throughout this document does not exclude a plurality.

### Brief description of the figures

Exemplifying and non-limiting embodiments and their advantages are explained in greater detail below in the sense of examples and with reference to the accompanying drawings, in which:
figures 1a, 1b, and 1c illustrate a rotor according to an exemplifying and non-limiting embodiment,
figure 2 shows a cross-section of a rotor according to an exemplifying and non-limiting embodiment,
figure 3 illustrates a detail of a rotor according to an exemplifying and non-limiting embodiment,
figure 4 illustrates a detail of a rotor according to an exemplifying and non-limiting embodiment,
figure 5 illustrates a detail of a rotor according to an example not belonging to the invention,
figure 6 illustrates a synchronous reluctance machine according to an exemplifying and non-limiting embodiment,
figure 7 shows a flowchart of a method according to an exemplifying and non-limiting embodiment for manufacturing a rotor of a synchronous reluctance machine,
figure 8 shows a cross-section of a rotor according to an exemplifying and non-limiting embodiment,
figure 9 illustrates a manufacturing stage of a rotor according to an exemplifying and non-limiting embodiment, and
figures 10a, 10b, and 10c show cross-sections of parts of rotors according to exemplifying and non-limiting embodiments.

### Description of exemplifying and non-limiting embodiments

The specific examples provided in the description given below should not be construed as limiting the scope and/or the applicability of the appended claims. Furthermore, it is to be understood that lists and groups of examples provided in the description given below are not exhaustive unless otherwise explicitly stated.

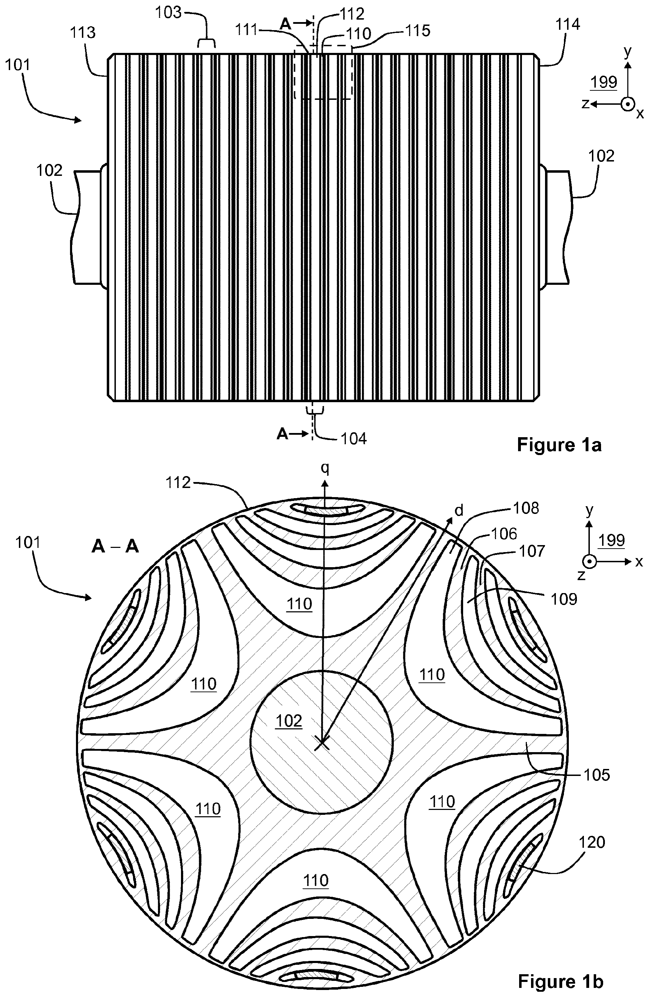

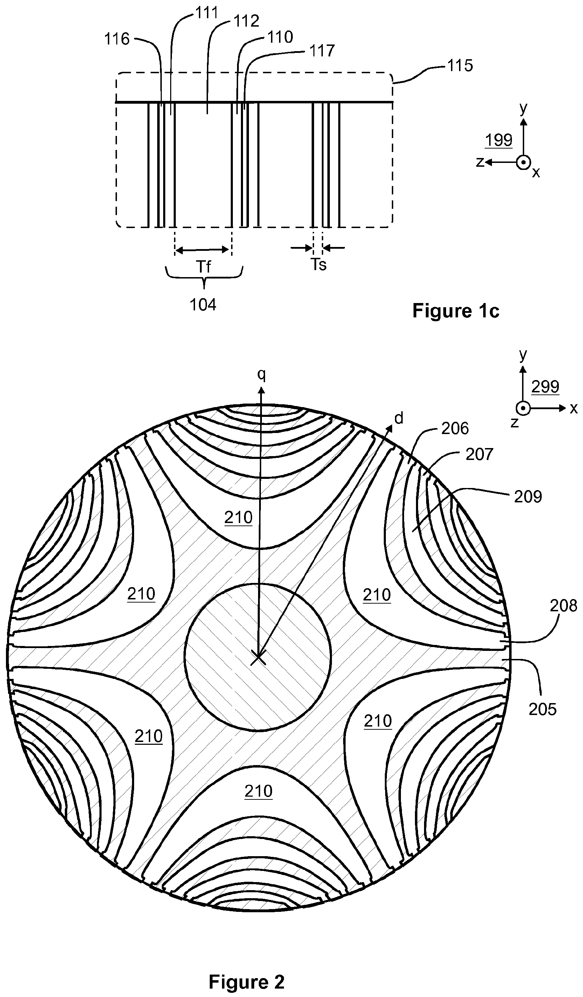

Figure 1a shows a sideview of a rotor 101 according to an exemplifying and non-limiting embodiment, and figure 1b shows a cross-section of the rotor 101. The cross-section shown in figure 1b is taken along a line A-A shown in figure 1a so that the geometric section plane is parallel with the xy-plane of a coordinate system 199. Figure 1c shows a magnification of a portion 115 of figure 1a.

The rotor 101 comprises a shaft 102 and modules stacked in the axial direction of the rotor and surrounding the shaft 102. The axial direction of the rotor is parallel with the z-axis of the coordinate system 199. In figure 1a, two of the axially stacked modules are denoted with references 103 and 104. Each of the modules comprises flux-guides made of ferromagnetic material, and gaps between the flux-guides to implement greater reluctance in a direction of the quadrature q axis of the rotor than in a direction of the direct d axis of the rotor. In figure 1b, three of the flux-guides are denoted with references 105, 106, and 107, and two of the gaps between the flux-guides are denoted with references 108 and 109. Furthermore, in this exemplifying case, the rotor 101 comprises endplates 113 and 114 which can be attached to the shaft e.g. by welding and which are configured to axially press the stack of the modules.

In this exemplifying rotor 101, each of the axially stacked modules comprises two support plates that are axially successively with respect to the flux-guides of the module so that the flux-guides are axially between the support plates. The flux-guides are attached to the support plates, and thus the support plates are arranged to mechanically support the flux-guides. One of the support plates of the module 104 is denoted with a reference 110 in figures 1a-1c, and the other one of the support plates of the module 104 is denoted with a reference 111 in figures 1a and 1c. Depending on mechanical requirements, the flux-guides can be attached to the support plates by for example gluing, soldering, or welding. The welding can be for example spot welding, laser welding, electron beam "EB" welding, or diffusion welding depending on the mechanical strength needed. Glue material used in the above-mentioned gluing many comprise for example resin such as epoxy-resin. The flux-guides can be cut off for example a ferromagnetic sheet that has a layer of glue material, e.g. resin, on its surface. The ferromagnetic sheet can be for example a backlack-v^{®} sheet. Correspondingly, the support plates can be cut off a sheet that has a layer of glue material, e.g. resin on its surface. It is also possible that the flux-guides are attached to the support plates with mechanical fastening arrangements such as e.g. screws or rivets.

In the exemplifying rotor 101 illustrated in figures 1a-1b, the flux-guides are constituted by a single piece 112 of ferromagnetic material. It is also possible that the flux-guides are separate ferromagnetic pieces which are attached to the support plates. Figure 2 shows a cross-section of an exemplifying rotor in which the flux-guides are separate ferromagnetic pieces which are attached to the support plates. The axial direction of the rotor is parallel with the z-axis of a coordinate system 299. In figure 2, three of the flux-guides which are attached to a support plate 210 are denoted with references 205, 206, and 207, and two of the gaps between the flux-guides are denoted with references 208 and 209. The ferromagnetic material of the flux-guides can be e.g. solid steel, laminated steel, or suitable soft magnetic composite "SMC" material such as Somaloy^{®}.

The axial thickness of the support plates is advantageously less than the axial thickness of the flux-guides. In figure 1c, the axial thickness of the support plates is denoted with Ts, and the axial thickness of the flux-guides is denoted with Tf. In a rotor according to an exemplifying and non-limiting embodiment, the axial thickness Ts of the support plate is on the range from 4 % to 20 % of the axial thickness Tf of the flux-guides. The support plates are advantageously thin with respect to the flux-guides to maximize the space factor, i.e. filling factor, of the flux-guides. For example, in an exemplifying case where the axial thickness of the flux-guides is 3 mm and the axial thickness of the support plates is 0.25 mm, the space factor of the flux-guides is 3/3.5 = 0.86 as each module has two support plates.

The support plates are advantageously made of non-ferromagnetic material to maximize the reluctance ratio between the direct and quadrature directions of the rotor. The non-ferromagnetic material of the support plates can be for example austenitic steel. It is to be noted that especially in cases in which the support plates are thin with respect to the flux-guides, a sufficient reluctance ratio can be achieved with ferromagnetic support plates, too.

A rotor according to an exemplifying and non-limiting embodiment comprises electrically insulating material between adjacent ones of the axially stacked modules. The electrically insulating material can be e.g. an electrically insulating spontaneous or artificially made oxide layer on surfaces of the modules, or there can be a layer of added electrically insulating material between the axially stacked modules. In figure 1c, electrically insulating material between adjacent modules is denoted with references 116 and 117. The electrically insulating material between the axially stacked modules reduce eddy currents and thereby losses of the rotor. As illustrated in figure 1c, none of the flux-guides of the rotor 101 is between adjacent ones of the support plates that belong to adjacent ones of the modules. Instead, in this exemplifying rotor 101, there is the above-mentioned electrically insulating material between adjacent ones of the support plates that belong to adjacent ones of the modules.

Thanks to the support plates, the flux-guides can be designed more freely from the viewpoints of desired magnetic properties than in a case in which there is no support plates and there must be sufficiently strong isthmuses between flux-guides to provide sufficient mechanical strength. The support plates can be, in turn, designed from the viewpoints of mechanical strength. The support plates can be free from apertures other than the aperture for the shaft 102. It is however also possible that the support plates have apertures for axially directed bolts or the like. Because of the different design targets related to the flux-guides and to the support plates, a surface area of the support plates seen along the axial direction of the rotor is greater than a surface area of the flux-guides seen along the axial direction of the rotor. In the exemplifying case shown in figure 1b, the surface area of the flux-guides is about 60% of the surface area of the support plates. In a rotor according to an exemplifying and non-limiting embodiment, the surface area of the flux-guides seen along the axial direction of the rotor is from 30 % to 80 % of the surface area of the support plates seen along the axial direction of the rotor.

The exemplifying rotor 101 illustrated in figures 1a-1c is a rotor of a permanent magnet "PM" assisted synchronous reluctance machine. The rotor 101 comprises permanent magnets to reduce the armature reaction in the quadrature direction of the rotor. In figure 1b, one of the permanent magnets is denoted with a reference 120. The permanent magnets have radial magnetizing directions. In a rotor according to an exemplifying and non-limiting embodiment, the support plates have apertures aligned with the gaps between the flux-guides so that axially directed channels are formed in the stack of the modules. In this exemplifying case, the permanent magnets can be installed in the channels after the stack of the modules has been assembled. Many permanent magnet materials are sensitive to heat and thus it is advantageous that the permanent magnets can be installed after heat producing manufacturing phases, such as welding, have been carried out. Each axially directed channel may extend through the stack of the modules or the axially directed channel may have a closed end.

It is also possible that the support plates in a rotor of a permanent magnet "PM" assisted synchronous reluctance machine are free from apertures of the kind mentioned above, but the support plates of the modules cover the gaps between the flux-guides. In this exemplifying case, the permanent magnets, such as the permanent magnet 120, are module-specific pieces of permanent magnet material which are in cavities defined by the flux guides and the support plates. The axial length of the pieces of the permanent magnet is at most an axial distance between successive ones of the support plates. It is also possible that every n^{th} of the support plates is free from apertures i.e. covers the gaps and the n-1 support plates between the every n^{th} of the support plates have apertures aligned with the gaps between the flux-guides. In this exemplifying case, the axial length of the pieces of the permanent magnet is at most an axial distance between successive ones of the every n^{th} of the support plates.

A rotor according to an exemplifying and non-limiting embodiment of the kind mentioned above comprises pieces of permanent magnet material in the gaps between the flux guides so that the pieces of the permanent magnet material are axially supported by the support plates of the modules, and the number of axially successive cavities for the pieces of the permanent magnet material is at least two and at most the number of the modules. An advantage of a rotor of the kind described above is that no axially directed long channels, which would decrease the mechanical strength of the rotor, need to be formed in the stack of the modules.

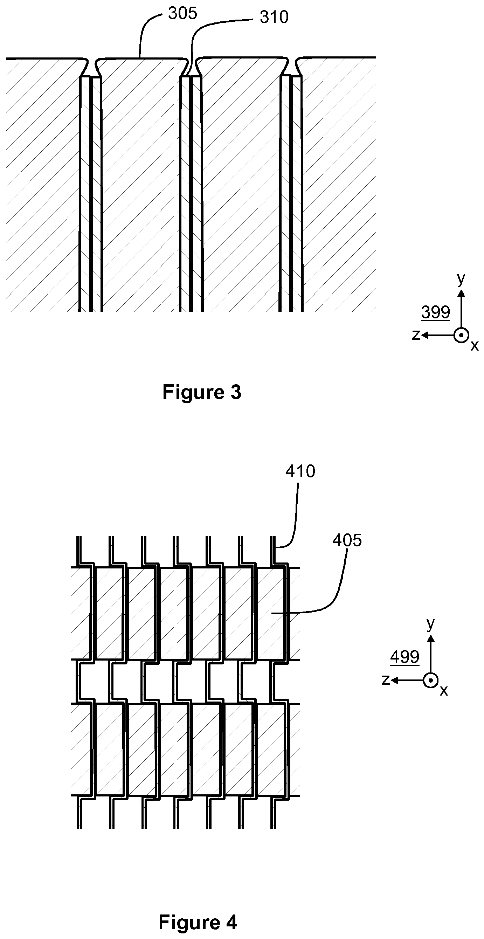

Figure 3 illustrates a detail of a rotor according to an exemplifying and non-limiting embodiment. Figure 3 shows a section view of a part of the rotor so that the geometric section plane coincides with the geometric axis of rotation of the rotor. The geometric axis of rotation of the rotor is parallel with the z-axis of a coordinate system 399. In this exemplifying case, the diameter of the support plates is smaller than a diameter of a geometric circle defined by the airgap surfaces of the flux-guides. In figure 3, one of the flux guides is denoted with a reference 305 and one of the support plates is denoted with a reference 310. As shown in figure 3, the portions of the flux-guides extending radially over the support plates are widened in the axial direction to reduce the reluctance in the direction of the direct axis of the rotor.

Figure 4 illustrates a detail of a rotor according to an exemplifying and non-limiting embodiment. Figure 4 shows a section view of a part of the rotor so that the geometric section plane coincides with the geometric axis of rotation of the rotor. The geometric axis of rotation of the rotor is parallel with the z-axis of a coordinate system 499. In this exemplifying case, each of the axially stacked modules has only one support plate and the support plates shown in figure 4 are attached to the flux-guides of adjacent ones of the modules. In figure 4, one of the support plates is denoted with a reference 410 and one of the flux-guides is denoted with a reference 405. According to the invention, each support plate is shaped to have axial recessions in which the flux-guides are located. Thus, the support plates are configured to implement shape locking of the flux-guides against centrifugal force. As shown in figure 4, each support plate is shaped to have the axial recessions so that the support plate has axial projections on a surface of the support plate opposite with respect to a surface of the support plate having the axial recessions.

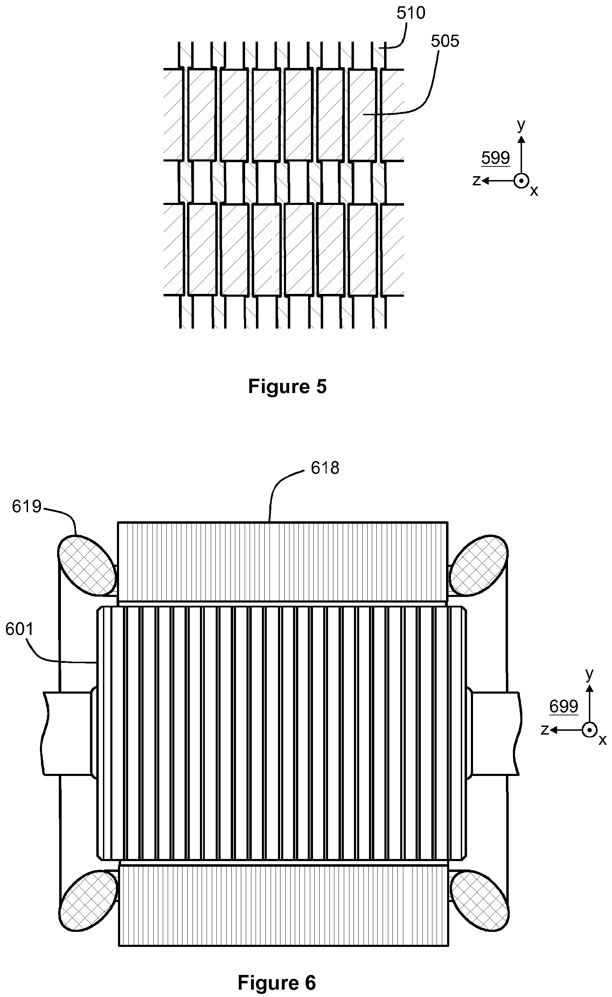

Figure 5 illustrates a detail of a rotor according to an exemplifying and non-limiting embodiment. Figure 5 shows a section view of a part of the rotor so that the geometric section plane coincides with the geometric axis of rotation of the rotor. The geometric axis of rotation of the rotor is parallel with the z-axis of a coordinate system 599. In this exemplifying case, each of the axially stacked modules has only one support plate and the support plates shown in figure 5 are attached to the flux-guides of adjacent ones of the modules. In figure 5, one of the support plates is denoted with a reference 510 and one of the flux-guides is denoted with a reference 505. According to the invention, each support plate is shaped to have axial recessions in which the flux-guides are located. Thus, the support plates are configured to implement shape locking of the flux-guides against centrifugal force. As shown in figure 5, an alternative configuration not covered by the invention, each support plate is shaped to have the axial recessions on both sides of the support plate to implement shape locking of the flux-guides on both sides of the support plate.

Figure 6 illustrates a synchronous reluctance machine according to an exemplifying and non-limiting embodiment. The synchronous reluctance machine comprises a rotor 601 according to an embodiment of the invention and a stator 618. The rotor 601 is rotatably supported with respect to the stator 618. In this exemplifying case, each of the axially stacked modules of the rotor 601 has only one support plate and each of the support plates, except the rightmost one, are attached to the flux-guides of adjacent ones of the modules. Joints between the support plates and the flux guides can be glue joints such that glue material may comprise for example epoxy-resin. The flux-guides can be cut off for example a ferromagnetic sheet that has a layer of glue material, e.g. resin, on its surface. The ferromagnetic sheet can be for example a backlack-v^{®} sheet. Correspondingly, the support plates can be cut off a sheet that has a layer of glue material, e.g. resin on its surface. Arrangements for rotatably supporting the rotor 601 with respect to the stator 618 are not shown in figure 6. The stator 618 comprises stator windings 619 for generating a rotating magnetic field in response to being supplied with alternating currents. The stator windings 619 can be for example a three-phase winding. The rotor 601 can be for example such as illustrated in figures 1a-1c.

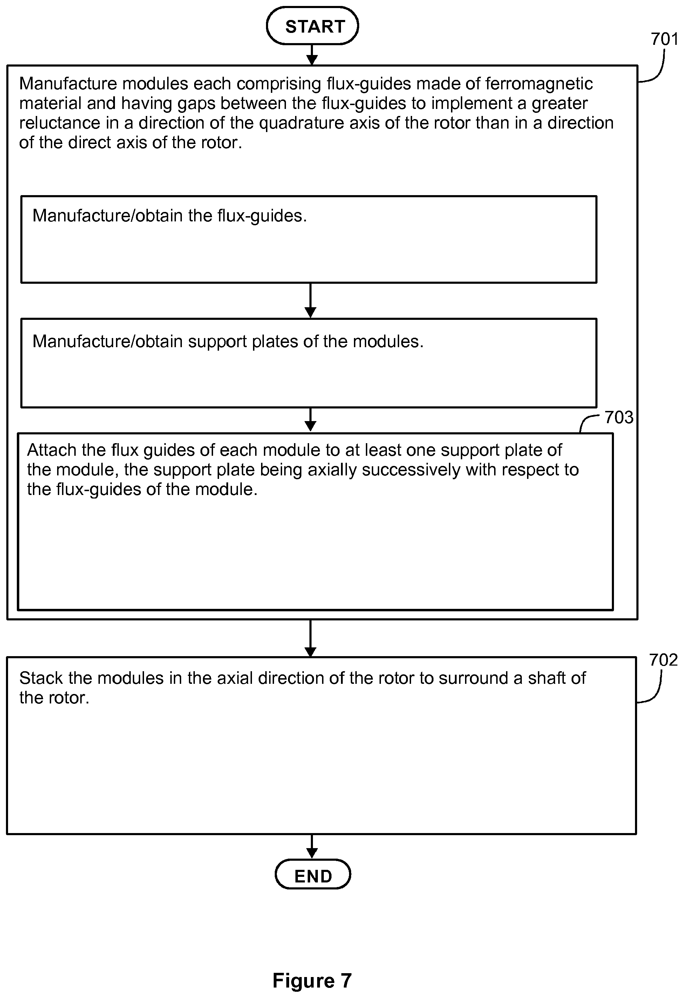

Figure 7 shows a flowchart of a method according to an exemplifying and non-limiting embodiment for manufacturing a rotor of a synchronous reluctance machine. The method according to the invention comprises the following actions:
- action 701: manufacturing modules each comprising flux-guides made of ferromagnetic material and having gaps between the flux-guides to implement greater reluctance in a direction of the quadrature axis of the rotor than in a direction of the direct axis of the rotor, and
- action 702: stacking the modules in the axial direction of the rotor to surround a shaft of the rotor.

The manufacturing 701 of each of the modules comprises attaching 703 the flux-guides of the module to at least one support plate of the module, the support plate being axially successively with respect to the flux-guides of the module. Furthermore, the manufacturing 701 of each of the modules may comprise manufacturing the flux-guides and/or manufacturing the support plates, or alternatively, obtaining the flux-guides and/or the support plates from one or more external vendors.

In a method according to an exemplifying and non-limiting embodiment, the manufacturing 701 of each of the modules comprises attaching the flux-guides of the module to another support plate of the module so that the flux-guides of the module are axially between the support plates of the module.

In a method according to an exemplifying and non-limiting embodiment, the above-mentioned attaching 703 is implemented by soldering or welding. The welding can be for example spot welding, laser welding, electron beam welding, or diffusion welding.

In a method according to an exemplifying and non-limiting embodiment, the above-mentioned attaching 703 is implemented with glue.

In a method according to an exemplifying and non-limiting embodiment, a surface area of the flux-guides of each module when seen along the axial direction of the rotor is from 30 % to 80 % of a surface area of each support plate of the module when seen along the axial direction of the rotor.

A method according to an exemplifying and non-limiting embodiment comprises placing electrically insulating material between adjacent ones of the modules.

In a method according to an exemplifying and non-limiting embodiment, an axial thickness of the support plates is less than an axial thickness of the flux-guides. In a method according to an exemplifying and non-limiting embodiment, the axial thickness of the support plates is on a range from 4 % to 20 % of the axial thickness of the flux-guides.

In a method according to an exemplifying and non-limiting embodiment, the support plates are made of non-ferromagnetic material. The non-ferromagnetic material can be for example austenitic steel.

Further according to the invention, the support plates are shaped to have axial recessions in which the flux-guides are located, and which are configured to implement shape locking of the flux-guides against centrifugal force. The support plates are shaped to have the axial recessions so that the support plates have axial projections on a surface of the support plate opposite with respect to the surface of the support plate having the axial recessions. Alternatively, in an example not covered by the invention, the support plates can be shaped to have the axial recessions on both sides of the support plates to implement shape locking of the flux-guides on both sides of each support plate.

In a method according to an exemplifying and non-limiting embodiment, the manufacturing 701 of each of the modules comprises gluing the flux-guides of the module to the support plate of the module, and the stacking 702 of the modules in the axial direction comprises gluing adjacent modules to each other.

Advantageously, at least some of the modules comprises only one support plate, and at least some of the support plates of these modules having only one support plate are glued to the flux-guides of adjacent ones of the modules.

In a method according to an exemplifying and non-limiting embodiment, the manufacturing 701 of each of the modules comprises cutting the flux-guides off a ferromagnetic sheet, e.g. a backlack-v^{®} sheet, having a layer of glue material on at least one surface of the ferromagnetic sheet.

In a method according to an exemplifying and non-limiting embodiment, the manufacturing 701 of each of the modules comprises cutting the support plate off a sheet having a layer of glue material on at least one surface of the sheet.

In a method according to an exemplifying and non-limiting embodiment, the glue material comprises epoxy-resin.

A method according to an exemplifying and non-limiting embodiment comprises heat treatment of the rotor to harden the glue material. The heat treatment can be carried out for example in an oven.

A method according to an exemplifying and non-limiting embodiment comprises machining by turning an airgap surface of the rotor after the modules have been stacked in the axial direction of the rotor.

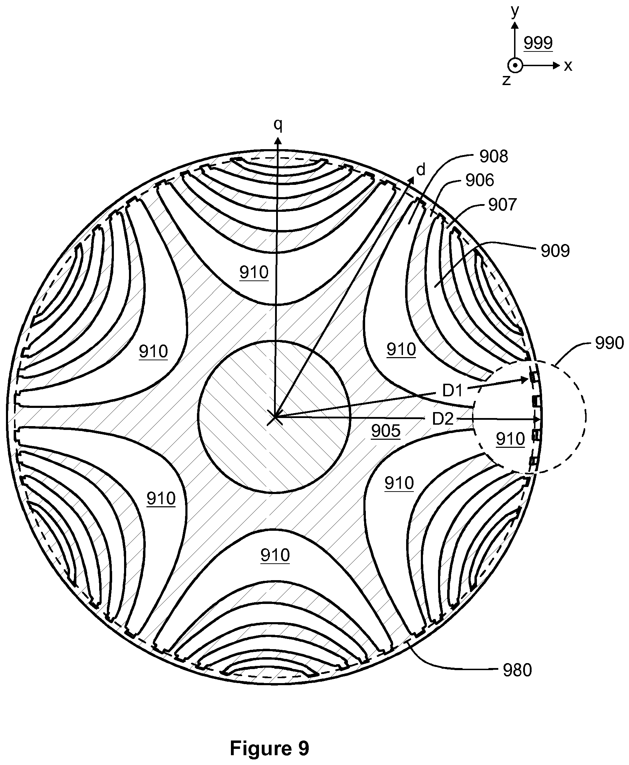

Figure 9 illustrates a manufacturing stage of a rotor according to an exemplifying and non-limiting embodiment prior to the machining of the airgap surface by turning. The axial direction of the rotor is parallel with the z-axis of a coordinate system 999. Three of the flux-guides are denoted with references 905, 906, and 907, and two of the gaps between the flux-guides are denoted with references 908 and 909. A support plate that is behind the above-mentioned flux guides is denoted with a reference 910. In the manufacturing stage shown in figure 9, the flux-guides are connected to each other by material that is outside a geometric dashed line circle 980. During the machining by turning, the material outside the geometric dashed line circle 980 is removed and, as a result, the rotor will be such as the rotor shown in figure 2 where the flux guides are separate from each other. Rotor plates such as the plate shown in figure 9 and constituting the flux guides can be cut by stamping from a same sheet from which stator plates are cut by stamping. The rotor and stator plates can be cut simultaneously to achieve an effective manufacturing process. The stator plates are not shown in figure 9.

In figure 9, a geometric dashed line circle 990 shows a shape of the support plate 910 so that the flux guides are not shown inside the geometric dashed line circle 990. The axial thickness of the support plate 910 can be so thin that the machining by turning may be problematic at the gaps where there is no axial support for the support plate 910. In the exemplifying case illustrated in figure 9, the above-mentioned problem is avoided so that a diameter D1 of the support plate 910 at the gaps is so small, i.e. smaller than the diameter of the geometric dashed line circle 980, that a machining edge does not reach the support plate 910 during the machining by turning. In the exemplifying case illustrated in figure 9, an outer rim of the support plate 910 has a toothed shape so that a diameter D2 of the support plate 910 at the flux guides equals with a diameter of the plate constituting the flux guides to provide axial support for the flux guides during the machining by turning.

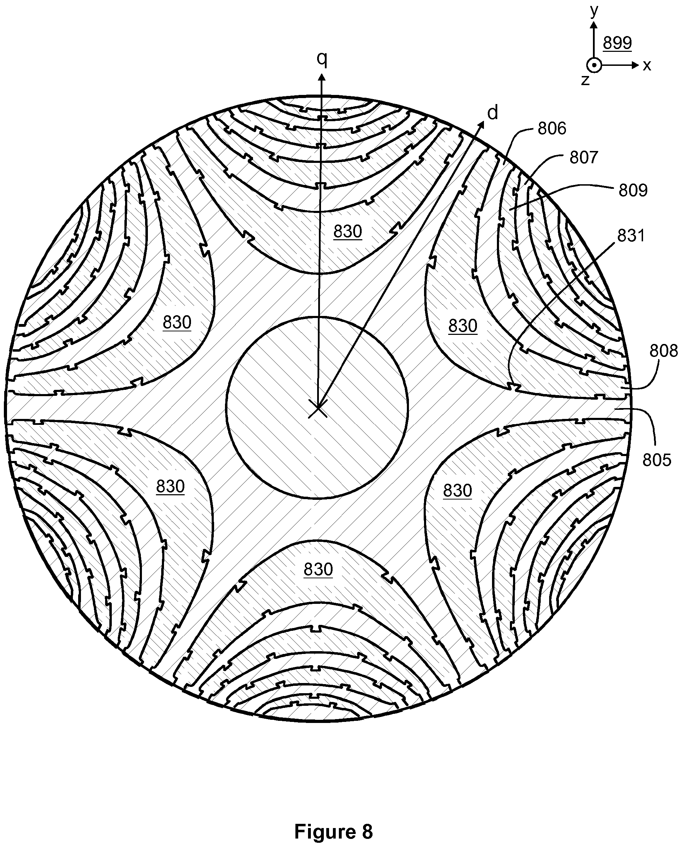

Figure 8 shows a cross-section of a rotor according to an exemplifying and non-limiting embodiment. The axial direction of the rotor is parallel with the z-axis of a coordinate system 899. In figure 8, three of the flux-guides are denoted with references 805, 806, and 807, and two of the gaps between the flux-guides are denoted with references 808 and 809. In this exemplifying case, the gaps between the flux guides are filled with solid material 830 and surfaces of the flux-guides which are in contact with the solid material are shaped to have projections to implement shape locking between the flux-guides and the solid material. In this exemplifying case, the projections are dovetail projections. One of the projections is denoted with a reference 831 in figure 8. It is also possible that the flux-guides are shaped to have recessions or both recessions and projections to implement the shape locking. The solid material may comprise for example resin reinforced with carbon nanotubes, such as e.g. Hybtonite^{™}, or other composite material, or non-ferromagnetic metal such as e.g. austenitic steel. The solid material can be for example material which has been cast into the above-mentioned gaps.

A method according to an exemplifying and non-limiting embodiment for manufacturing a rotor of a synchronous reluctance machine comprises filling the gaps with material which is solid material after the manufacturing of the rotor, wherein surfaces of the flux-guides to be in contact with the solid material are shaped to have projections to implement shape locking between the flux-guides and the solid material.

A method according to an exemplifying and non-limiting embodiment comprises casting the material into the gaps in a fluent form and solidifying the material into a solid form.

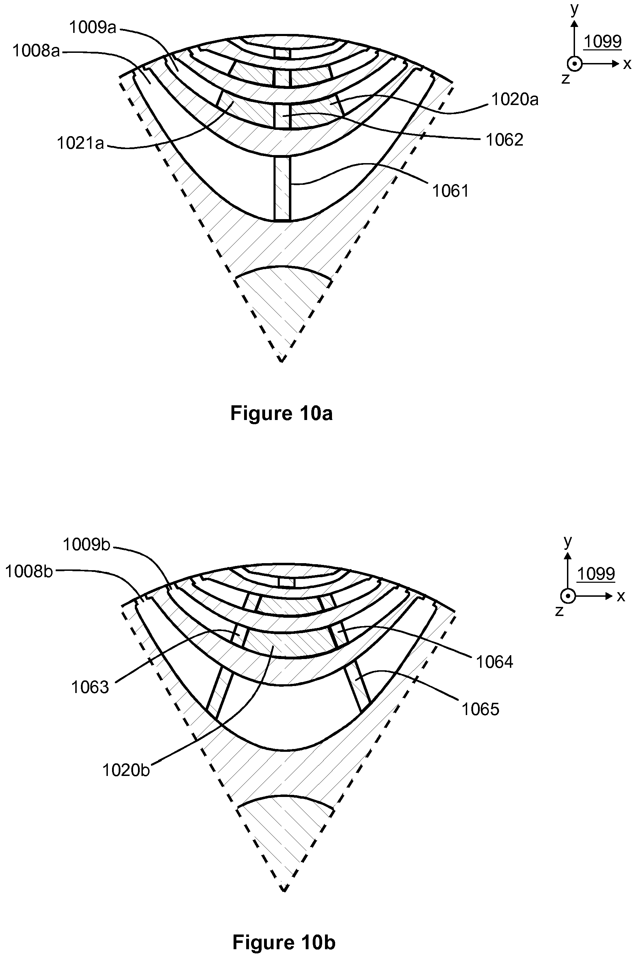

Figure 10a shows a cross-section of a part of a rotor according to an exemplifying and non-limiting embodiment. In this exemplifying case, the gaps between the flux guides contain bridge elements made of non-ferromagnetic material and each being attached to surfaces of the flux guides constituting the gap containing the bridge element under consideration. In figure 10a, two of the gaps are denoted with references 1008a and 1009a and two of the bridge elements are denoted with references 1061 and 1062. The non-ferromagnetic material of the bridge elements can be for example austenitic steel. The bridge elements can be attached to the flux guides for example by welding or soldering. It is also possible that, in addition to or instead of the welding or soldering, the bridge elements are attached to the flux guides with dovetail joints such as the dovetail joints shown in figure 8 or with a shape locking provided with other mechanical shapes. The bridge elements improve the mechanical strength of the rotor. In the exemplifying case illustrated in figure 10a, each of the bridge elements is on a geometric symmetry line of the gap containing the bridge element under consideration, when the rotor is seen along the axial direction of the rotor i.e. along the z-axis of a coordinate system 1099. The rest of the gaps can be filled with solid material that may comprise for example resin reinforced with carbon nanotubes, such as e.g. Hybtonite^{™}, or some other suitable solid material. The surfaces of the flux-guides which are in contact with the solid material and the solid material can be shaped to have mechanical shapes to implement shape locking between the flux-guides and the solid material like in the exemplifying case illustrated in figure 8.

In the exemplifying case illustrated in figure 10a, the rotor is a rotor of a permanent magnet "PM" assisted synchronous reluctance machine. The rotor comprises permanent magnets symmetrically on both sides of at least some of the bridge elements, when the rotor is seen along the axial direction of the rotor. In figure 10a, two of the permanent magnets which are symmetrically on both sides of the bridge element 1062 are denoted with references 1020a and 1021a. It is also possible that a rotor according to an exemplifying and non-limiting embodiment and comprising bridge elements of the kind shown in figure 10a does not comprise permanent magnets. Also in this exemplifying case, the rest of the gaps outside the bridge elements and the permanent magnets can be filled with solid material that may comprise for example resin reinforced with carbon nanotubes, such as e.g. Hybtonite^{™}, or some other suitable solid material.

Figure 10b shows a cross-section of a part of a rotor according to an exemplifying and non-limiting embodiment. The gaps between the flux guides contain bridge elements made of non-ferromagnetic material and each being attached to surfaces of the flux guides constituting the gap containing the bridge element under consideration. In figure 10b, two of the gaps are denoted with references 1008b and 1009b and three of the bridge elements are denoted with references 1063, 1064, and 1065. In the exemplifying case illustrated in figure 10b, some of the gaps contains two bridge elements symmetrically with respect to the geometric symmetry line of the gap so that the two bridge elements are a distance away from each other, when the rotor is seen along the axial direction of the rotor. Also in this exemplifying case, at least some portions of the gaps outside the bridge elements can be filled with solid material that may comprise for example resin reinforced with carbon nanotubes, such as e.g. Hybtonite^{™}, or some other suitable solid material.

In the exemplifying case illustrated in figure 10b, the rotor is a rotor of a permanent magnet "PM" assisted synchronous reluctance machine. The rotor comprises permanent magnets in cavities each defined by two bridge elements and the flux guides constituting the gap containing the two bridge elements. In figure 10b, a permanent magnet which is in a cavity of the kind mentioned above is denoted with a reference 1020b. It is also possible that a rotor according to an exemplifying and non-limiting embodiment and comprising bridge elements of the kind shown in figure 10b does not comprise permanent magnets. Also in this exemplifying case, the rest of the gaps outside the bridge elements and the permanent magnets can be filled with solid material that may comprise for example resin reinforced with carbon nanotubes, such as e.g. Hybtonite^{™}, or some other suitable solid material.

In a rotor of a permanent magnet "PM" assisted synchronous reluctance machine according to an exemplifying and non-limiting embodiment, some of the bridge elements are made of ferromagnetic material to amplify magnetic fluxes generated by the permanent magnets whereas other ones of the bridge elements are made of non-ferromagnetic material such as e.g. austenitic steel.

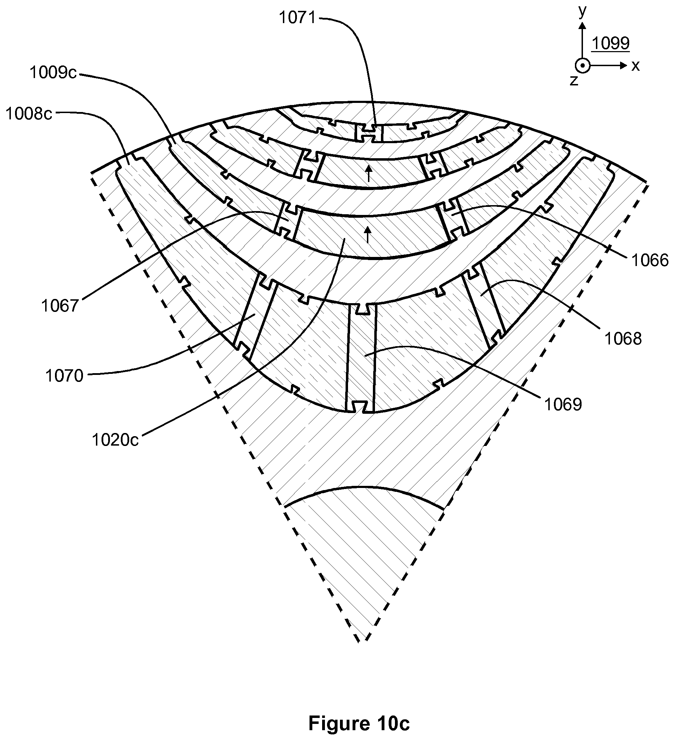

Figure 10c shows a cross-section of a part of a rotor according to an exemplifying and non-limiting embodiment. The gaps between the flux guides contain bridge elements each being attached with dovetail joints to surfaces of the flux guides constituting the gap containing the bridge element under consideration. In figure 10c, two of the gaps are denoted with references 1008c and 1009c and six of the bridge elements are denoted with references 1066, 1067, 1068, 1069, 1070, and 1071. In the exemplifying case illustrated in figure 10c, the rotor comprises permanent magnets in cavities each defined by two bridge elements and the flux guides constituting the gap containing the two bridge elements. One of the permanent magnets is denoted with a reference 1020c. The magnetizing directions of the permanent magnets are depicted with arrows presented on top of the permanent magnets. The bridge elements 1069 and 1071 can be made of ferromagnetic material to amplify magnetic fluxes generated by the permanent magnets. It is also possible that, instead of the ferromagnetic bridge elements 1069 and 1071, the flux guides are shaped to form isthmuses on the places of the ferromagnetic bridge elements 1069 and 1071.

In the exemplifying case illustrated in figure 10c, portions of the gaps outside the bridge elements and the permanent magnets are filled with solid material that may comprise for example resin reinforced with carbon nanotubes, such as e.g. Hybtonite^{™}, or some other suitable solid material. The surfaces of the flux-guides which are in contact with the solid material and the solid material are shaped to have mechanical shapes, e.g. dovetail joints as shown in figure 10c, to implement shape locking between the flux-guides and the solid material.

A method according to an exemplifying and non-limiting embodiment for manufacturing a rotor of a synchronous reluctance machine comprises, prior to stacking the modules in the axial direction, placing bridge elements into the gaps between the flux guides and attaching each of the bridge elements to surfaces of the flux guides constituting the gap containing the bridge element under consideration.

In a method according to an exemplifying and non-limiting embodiment, at least some of the bridge elements are placed into the gaps so that each of these bridge elements is on a geometric symmetry line of the gap containing the bridge element under consideration when the rotor is seen along the axial direction of the rotor.

A method according to an exemplifying and non-limiting embodiment comprises placing permanent magnets symmetrically on both sides of at least some of the bridge elements which are on the geometric symmetry lines of the gaps, when the rotor is seen along the axial direction of the rotor.

In a method according to an exemplifying and non-limiting embodiment, at least some of the bridge elements are placed into the gaps so that at least some of the gaps are gaps each of which contains two of the bridge elements symmetrically with respect to the geometric symmetry line of the gap so that the two bridge elements are a distance away from each other, when the rotor is seen along the axial direction of the rotor.

A method according to an exemplifying and non-limiting embodiment comprises placing permanent magnets in cavities each defined by two bridge elements and the flux guides constituting the gap containing the two bridge elements.

In a method according to an exemplifying and non-limiting embodiment, the rotor is a rotor of a permanent magnet "PM" assisted synchronous reluctance machine and some of the bridge elements are made of ferromagnetic material to amplify magnetic fluxes generated by the permanent magnets of the rotor, whereas other ones of the bridge elements are made of non-ferromagnetic material such as e.g. austenitic steel.

The specific examples provided in the description given above should not be construed as limiting the applicability and/or the interpretation of the appended claims. Lists and groups of examples provided in the description given above are not exhaustive unless otherwise explicitly stated.

## Claims

1. A rotor (101, 601) for a synchronous reluctance machine, the rotor comprising a shaft (102) and modules (103, 104) stacked in an axial direction (z) of the rotor and surrounding the shaft, wherein each of the modules comprises flux-guides (105-107, 205-207,305, 405, 505, 805-807) made of ferromagnetic material, and there are gaps (108, 109, 208, 209, 808, 809) between the flux-guides to implement greater reluctance in a direction of a quadrature (q) axis of the rotor than in a direction of a direct (d) axis of the rotor, wherein each of the modules comprises at least one support plate (110, 210, 310, 410, 510) axially successively with respect to the flux-guides, wherein the flux-guides are attached to the support plate, and wherein the support plate (410, 510) is shaped to have axial recessions in which the flux-guides (405, 505) are located, and which are configured to implement shape locking of the flux-guides against centrifugal force, **characterized in that** the support plate (410) is shaped to have the axial recessions so that the support plate has axial projections on a surface of the support plate opposite with respect to a surface of the support plate having the axial recessions.

2. A rotor according to claim 1, wherein at least some of the modules comprise only one support plate, and at least some of the support plates are attached to the flux-guides of adjacent ones of the modules.

3. A rotor according to claim 1, wherein each of the modules comprises another support plate (111) attached to the flux-guides, and the flux-guides are axially between the support plates (110, 111), none of the flux-guides being between adjacent ones of the support plates belonging to adjacent ones of the modules.

4. A rotor according to any one of claims 1-3, wherein the rotor comprises electrically insulating material (116, 117) between adjacent ones of the modules.

5. A rotor according to any one of claims 1-4, wherein an axial thickness (Ts) of the support plate is less than an axial thickness (Tf) of the flux-guides.

6. A rotor according to any one of claims 1-5, wherein the support plate is made of non-ferromagnetic material.

7. A rotor according to any one of claims 1-6, wherein the rotor comprises welding or soldering joints to attach the flux-guides to the support plate.

8. A rotor according to any one of claims 1-7, wherein the rotor comprises glue joints to attach the flux-guides to the support plate.

9. A rotor according to any one of claims 1-8, wherein a diameter of the support plate (310) is smaller than a diameter of a geometric circle defined by airgap surfaces of the flux-guides (305), and portions of the flux-guides extending radially over the support plate are widened in the axial direction (z) of the rotor to reduce the reluctance in the direction of the direct axis of the rotor.

10. A rotor according to any one of claims 1-9, wherein the support plates of the modules have apertures aligned with the gaps between the flux-guides to form axially directed channels in a stack of the modules, and the rotor comprises permanent magnets (120) placed in the axially directed channels.

11. A rotor according to any one of claims 1-10, wherein the rotor comprises pieces of permanent magnet material in the gaps and the so that the pieces of the permanent magnet material are axially supported by the support plates of the modules, and a number of axially successive cavities for the pieces of the permanent magnet material is at least two and at most a number of the modules.

12. A rotor according to any one of claims 1-11, wherein the gaps (808, 809) between the flux guides contain solid material (830), and surfaces of the flux-guides which are in contact with the solid material are shaped to have projections (831) and/or recessions configured to implement shape locking between the flux-guides and the solid material.

13. A rotor according to any one of claims 1-12, wherein at least some of the gaps (1008a, 1009a, 1008b, 1009b) contain bridge elements (1061, 1062, 1063, 1064, 1065) each being attached to surfaces of the flux guides constituting the gap containing the bridge element.

14. A synchronous reluctance machine comprising:
- a stator (618) comprising stator windings (619) for generating a rotating magnetic field in response to being supplied with alternating currents, and
- a rotor (601) according to any one of claims 1-13 and rotatably supported with respect to the stator.

15. A method for manufacturing a rotor of a synchronous reluctance machine, the method comprising:
- manufacturing (701) modules each comprising flux-guides made of ferromagnetic material and having gaps between the flux-guides to implement greater reluctance in a direction of a quadrature axis of the rotor than in a direction of a direct axis of the rotor, and
- stacking (702) the modules in an axial direction of the rotor to surround a shaft of the rotor,
wherein the manufacturing (701) of each of the modules comprises attaching (703) the flux-guides of the module to at least one support plate of the module, the support plate being axially successively with respect to the flux-guides of the module, wherein the support plates are shaped to have axial recessions in which the flux-guides are located, and which are configured to implement shape locking of the flux-guides against centrifugal force, **characterized in that** the support plates are shaped to have the axial recessions so that the support plates have axial projections on a surface of the support plate opposite with respect to the surface of the support plate having the axial recessions.

## Patentansprüche

1. Rotor (101, 601) für eine Synchron-Reluktanzmaschine, wobei der Rotor eine Welle (102) und Module (103, 104), die in einer axialen Richtung (z) des Rotors gestapelt sind und die Welle umgeben, umfasst, wobei jedes von den Modulen Flussführungen (105-107, 205-207, 305, 405, 805-807), die aus ferromagnetischem Material hergestellt sind, umfasst und es Spalte (108, 109, 208, 209, 808, 809) zwischen den Flussführungen gibt, um eine größere Reluktanz in einer Richtung der Querachse (q) des Rotors als in einer Richtung einer Längsachse (d) des Rotors zu erzeugen, wobei jedes von den Modulen mindestens eine Trägerplatte (110, 210, 310, 410, 510) in Axialrichtung aufeinanderfolgend in Bezug auf die Flussführungen umfasst, wobei die Flussführungen an der Trägerplatte befestigt sind und wobei die Trägerplatte (410, 510) so geformt ist, dass sie axiale Vertiefungen aufweist, in denen die Flussführungen (405, 505) angeordnet sind und die dafür konfiguriert sind, eine formschlüssige Arretierung der Flussführungen gegen eine Zentrifugalkraft umzusetzen, **dadurch gekennzeichnet, dass** die Trägerplatte (410) so geformt ist, dass sie die axialen Vertiefungen so aufweist, dass die Trägerplatte axiale Vorsprünge auf einer Oberfläche der Trägerplatte aufweist, entgegengesetzt in Bezug auf eine Oberfläche der Trägerplatte, welche die axialen Vertiefungen aufweist.

2. Rotor nach Anspruch 1, wobei zumindest einige von den Modulen nur eine Trägerplatte umfassen und zumindest einige von den Trägerplatten an den Flussführungen von benachbarten von den Modulen befestigt sind.

3. Rotor nach Anspruch 1, wobei jedes von den Modulen eine andere Trägerplatte (111) umfasst, die an den Flussführungen befestigt ist, und sich die Flussführungen in Axialrichtung zwischen den Trägerplatten (110, 111) befinden, wobei sich keine von den Flussführungen zwischen benachbarten von den Trägerplatten befindet, die zu benachbarten von den Modulen gehören.

4. Rotor nach einem der Ansprüche 1 bis 3, wobei der Rotor elektrisch isolierendes Material (116, 117) zwischen benachbarten von den Modulen umfasst.

5. Rotor nach einem der Ansprüche 1 bis 4, wobei eine axiale Dicke (Ts) der Trägerplatte geringer ist als eine axiale Dicke (Tf) der Flussführungen.

6. Rotor nach einem der Ansprüche 1 bis 5, wobei die Trägerplatte aus einem nicht-ferromagnetischen Material hergestellt ist.

7. Rotor nach einem der Ansprüche 1 bis 6, wobei der Rotor Schweiß- oder Lötverbindungen umfasst, um die Flussführungen an der Trägerplatte zu befestigen.

8. Rotor nach einem der Ansprüche 1 bis 7, wobei der Rotor Klebstoffverbindungen umfasst, um die Flussführungen an der Trägerplatte zu befestigen.

9. Rotor nach einem der Ansprüche 1 bis 8, wobei ein Durchmesser der Trägerplatte (310) kleiner ist als ein Durchmesser eines geometrischen Kreises, der durch Luftspalt-Oberflächen der Flussführungen (305) definiert wird, und Abschnitte der Flussführungen, die sich in Radialrichtung über der Trägerplatte erstrecken, in der axialen Richtung (z) des Rotors verbreitert sind, um die Reluktanz in der Richtung der Längsachse des Rotors zu verringern.

10. Rotor nach einem der Ansprüche 1 bis 9, wobei die Trägerplatten der Module Öffnungen aufweisen, die mit den Spalten zwischen den Flussführungen ausgerichtet sind, um axial gerichtete Kanäle in dem Stapel der Module zu bilden, und der Rotor Permanentmagneten (120) umfasst, die in den axial gerichteten Kanälen platziert sind.

11. Rotor nach einem der Ansprüche 1 bis 10, wobei der Rotor Stücke von Permanentmagnetmaterial in den Spalten und so, dass die Stücke des Permanentmagnetmaterials in Axialrichtung durch die Trägerplatten der Module getragen werden, umfasst und eine Anzahl von in Axialrichtung aufeinanderfolgenden Hohlräumen für die Stücke des Permanentmagnetmaterials mindestens zwei und höchstens eine Anzahl der Module beträgt.

12. Rotor nach einem der Ansprüche 1 bis 11, wobei die Spalte (808, 809) zwischen den Flussführungen ein festes Material (830) enthalten und Oberflächen der Flussführungen, die mit dem festen Material in Kontakt stehen, so geformt sind, dass sie Vorsprünge (831) und/oder Vertiefungen aufweisen, die dafür konfiguriert sind, eine formschlüssige Arretierung zwischen den Flussführungen und dem festen Material umzusetzen.

13. Rotor nach einem der Ansprüche 1 bis 12, wobei zumindest einige der Spalte (1008a, 1009a, 1008b, 1009b) Brückenelemente (1061, 1062, 1063, 1064, 1065) enthalten, die jeweils an Oberflächen der Flussführungen befestigt sind, die den Spalt ausmachen, der das Brückenelement enthält.

14. Synchron-Reluktanzmaschine, die Folgendes umfasst:
- einen Stator (618), der Statorwicklungen (619) zum Erzeugen eines rotierenden Magnetfeldes als Reaktion darauf, dass er mit Wechselströmen versorgt wird, umfasst, und
- einen Rotor (601) nach einem der Ansprüche 1 bis 13 und drehbar in Bezug auf den Stator getragen.

15. Verfahren zum Herstellen eines Rotors einer Synchron-Reluktanzmaschine, wobei das Verfahren Folgendes umfasst:
- Herstellen (701) von Modulen, die jeweils Flussführungen umfassen, die aus ferromagnetischem Material hergestellt sind, und Spalte zwischen den Flussführungen aufweisen, um eine größere Reluktanz in einer Richtung einer Querachse des Rotors als in einer Richtung einer Längsachse des Rotors zu erzeugen, und
- Stapeln (702) der Module in der axialen Richtung des Rotors, um eine Welle des Rotors zu umgeben,
wobei das Herstellen (701) jedes von den Modulen das Befestigen (703) der Flussführungen des Moduls an mindestens einer Trägerplatte des Moduls umfasst, wobei die Trägerplatte in Axialrichtung aufeinanderfolgend in Bezug auf die Flussführungen des Moduls ist, wobei die Trägerplatten so geformt sind, dass sie axiale Vertiefungen aufweisen, in denen die Flussführungen angeordnet sind und die dafür konfiguriert sind, eine formschlüssige Arretierung der Flussführungen gegen eine Zentrifugalkraft umzusetzen, **dadurch gekennzeichnet, dass** die Trägerplatten so geformt sind, dass sie die axialen Vertiefungen so aufweisen, dass die Trägerplatten axiale Vorsprünge auf einer Oberfläche der Trägerplatte aufweisen, entgegengesetzt in Bezug auf eine Oberfläche der Trägerplatte, welche die axialen Vertiefungen aufweist.

## Revendications

1. Rotor (101, 601) pour une machine à reluctance synchrone, le rotor comprenant un arbre (102) et des modules (103, 104) empilés dans une direction axiale (z) du rotor et entourant l'arbre, dans lequel chacun des modules comprend des guides de flux (105-107, 205-207, 305, 405, 505, 805-807) constitués d'un matériau ferromagnétique, et il est prévu des espaces (108, 109, 208, 209, 808, 809) entre les guides de flux pour établir une reluctance plus grande dans une direction d'un axe en quadrature (q) du rotor que dans une direction d'un axe direct (d) du rotor, dans lequel chacun des modules comprend au moins une plaque de support (110, 210, 310, 410, 510) successivement dans le sens axial par rapport aux guides de flux, dans lequel les guides de flux sont fixés à la plaque de support, et dans lequel la plaque de support (410, 510) est formée de manière à comporter des dépressions axiales dans lesquelles sont placés les guides de flux (405, 505), et lesquelles sont configurées pour réaliser un blocage de forme des guides de flux contre une force centrifuge, **caractérisé en ce que** la plaque de support (410) est formée de manière à comporter les dépressions axiales de sorte que la plaque de support présente des saillies axiales sur une surface de la plaque de support opposée par rapport à une surface de la plaque de support comportant les dépressions axiales.

2. Rotor selon la revendication 1, dans lequel au moins certains des modules comprennent seulement une plaque de support, et au moins certaines des plaques de support sont fixées aux guides de flux de modules adjacents.

3. Rotor selon la revendication 1, dans lequel chacun des modules comprend une autre plaque de support (111) fixée aux guides de flux, et les guides de flux sont placés axialement entre les plaques de support (110, 111), aucun des guides de flux n'étant placé entre des plaques de support adjacentes appartenant à des modules adjacents.

4. Rotor selon l'une quelconque des revendications 1 à 3, dans lequel le rotor comprend un matériau électriquement isolant (116, 117) entre des modules adjacents.

5. Rotor selon l'une quelconque des revendications 1 à 4, dans lequel une épaisseur axiale (Ts) de la plaque de support est inférieure à une épaisseur axiale (Tf) des guides de flux.

6. Rotor selon l'une quelconque des revendications 1 à 5, dans lequel la plaque de support est constituée d'un matériau non ferromagnétique.

7. Rotor selon l'une quelconque des revendications 1 à 6, dans lequel le rotor comprend des joints de soudure ou de brasure pour la fixation des guides de flux à la plaque de support.

8. Rotor selon l'une quelconque des revendications 1 à 7, dans lequel le rotor comprend des joints de colle pour la fixation des guides de flux à la plaque de support.

9. Rotor selon l'une quelconque des revendications 1 à 8, dans lequel un diamètre de la plaque de support (310) est inférieur à un diamètre d'un cercle géométrique défini par des surfaces d'entrefer des guides de flux (305), et des parties des guides de flux s'étendant radialement sur la plaque de support sont élargies dans la direction axiale (z) du rotor pour réduire la reluctance dans la direction de l'axe direct du rotor.

10. Rotor selon l'une quelconque des revendications 1 à 9, dans lequel les plaques de support des modules ont des ouvertures alignées avec les espaces entres les guides de flux pour former des canaux dirigés axialement dans une pile des modules, et le rotor comprend des aimants permanents (120) placés dans les canaux dirigés axialement.

11. Rotor selon l'une quelconque des revendications 1 à 10, dans lequel le rotor comprend des pièces de matériau d'aimant permanent dans les espaces et de sorte que les pièces du matériau d'aimant permanent sont supportées axialement par les plaques de support des modules, et un nombre de cavités axialement successives pour les pièces du matériau d'aimant permanent est d'au moins deux et au maximum un nombre des modules.

12. Rotor selon l'une quelconque des revendications 1 à 11, dans lequel les espaces (808, 809) entre les guides de flux contiennent un matériau solide (830), et des surfaces des guides de flux en contact avec le matériau solide sont formées de manière à comporter des saillies (831) et/ou des dépressions configurées pour réaliser un blocage de forme entre les guides de flux et le matériau solide.

13. Rotor selon l'une quelconque des revendications 1 à 12, dans lequel au moins certains des espaces (1008a, 1009a, 1008b, 1009b) contiennent des éléments de pont (1061, 1062, 1063, 1064, 1065) fixés respectivement à des surfaces des guides de flux constituant l'espace contenant l'élément de pont.

14. Machine à reluctance synchrone comprenant :
- un stator (618) comprenant des enroulements de stator (619) pour la génération d'un champ magnétique rotatif en réponse à l'alimentation en courants alternatifs, et
- un rotor (601) selon l'une quelconque des revendications 1 à 13 et supporté de façon rotative par rapport au stator.

15. Procédé de fabrication d'un rotor d'une machine à reluctance synchrone, le procédé comprenant :
- la fabrication (701) de modules comprenant respectivement des guides de flux constitués d'un matériau ferromagnétique et comportant des espaces entre les guides de flux pour établir une reluctance plus grande dans une direction d'un axe en quadrature du rotor que dans une direction d'un axe direct du rotor, et
- l'empilage (702) des modules dans une direction axiale du rotor pour entourer un arbre du rotor,
dans lequel la fabrication (701) de chacun des modules comprend la fixation (703) des guides de flux du module à au moins une plaque de support du module, la plaque de support étant placée successivement dans le sens axial par rapport aux guides de flux du module, dans lequel les plaques de support sont formées de manière à comporter des dépressions axiales dans lesquelles sont placés les guides de flux, et lesquelles sont configurées de manière à réaliser un blocage de forme des guides de flux contre une force centrifuge, **caractérisé en ce que** les plaques de support sont formées de manière à comporter les dépressions axiales de sorte que les plaques de support comportent des saillies axiales sur une surface de la plaque de support opposée par rapport à la surface de la plaque de support comportant les dépressions axiales.
